# EUROPÄISCHE PATENTSCHRIFT

(11) **EP 4 221 936 B1**
(45) Veröffentlichungstag und Bekanntmachung des Hinweises auf die Patenterteilung: **30.07.2025**
(21) Anmeldenummer: 21783141.1
(22) Anmeldetag: 15.09.2021
(51) Int. Cl.: B23Q 3/10, B23C 3/30, B25H 1/08, F16B 37/04

(54) **PLATTE MIT MINDESTENS EINER NUT IN IHRER OBERFLÄCHE UND NUTENSTEIN**
PLATE WITH AT LEAST ONE SLOT IN ITS SURFACE AND SLOT NUT
PLAQUE AVEC AU MOINS UNE FENTE DANS SA SURFACE ET ÉCROU À FENTE

(30) Priorität: 29.09.2020 DE 102020005960
(43) Veröffentlichungstag der Anmeldung: 09.08.2023
(73) Patentinhaber: Bernd Siegmund GmbH, 86507 Oberottmarshausen (DE)
(72) Erfinder: KAPPEL, Michael, 73326 Deggingen (DE)
(74) Vertreter: Seifert, Thomas
(86) Internationale Anmeldenummer: PCT/EP2021/025346
(87) Internationale Veröffentlichungsnummer: WO 2022/069070

(56) Entgegenhaltungen:
- DE-A1- 3 008 195
- DE-T2- 69 012 313
- DE-U1- 9 115 943
- JP-U- H 063 536
- US-A- 5 509 644
- US-A1- 2020 086 460

## Beschreibung

Die Erfindung bezieht sich auf eine Platte mit mindestens einer Nut in ihrer Oberfläche, wobei die Nut zur Aufnahme eines Nutensteins vorgesehen ist und der Querschnitt der Nut senkrecht zur Längsrichtung der Nut ein Sechseck ist, und auf einen Nutenstein, der zur Aufnahme in einer Nut in einer Oberfläche einer Platte vorgesehen ist, wobei der Nutenstein einen Querschnitt senkrecht zur Längsrichtung der Nut aufweist, der ein Sechseck ist.

Aus dem Stand der Technik sind Platten mit mindestens einer Nut in ihrer Oberfläche bekannt, wobei die Nut zur Aufnahme eines Nutensteins vorgesehen ist. Die Nut ist dabei T-förmig ausgestaltet. Hierzu sind entsprechend T-förmig ausgestaltete Nutensteine bekannt, die in der Nut aufgenommen werden können. An den Nutensteinen können, üblicherweise in Gewindebohrungen, Spannelemente oder dergleichen befestigt werden.

Derartige Platten finden insbesondere bei Nutentischen Verwendung, bei denen mehrere Nuten parallel zueinander angeordnet sind, wobei die Nuten in Querrichtung, in Längsrichtung oder sowohl in Quer- als auch in Längsrichtung der Platte verlaufen können. Darüber hinaus ist es bekannt, dass diese Nutentische zusätzlich mit Bohrungen, die in einem regelmäßigen Raster angeordnet sind, in der Oberfläche des Nutentischs und in gegebenenfalls vorhandenen Seitenwangen versehen sind und Bestandteil von Schweiß- und Spanntischsystemen sind. Schweiß- und Spanntischsysteme beruhen auf einem flexiblen Baukastensystem, das aus einer Kombination von Systembohrungen und kompatiblen Spannelementen besteht. Die Spannelemente umfassen Anschläge, Winkel, Bolzen, Zwingen, Prismen, Auflagen und weiteres Zubehör.

Bei den bekannten Platten mit T-förmiger Nut ist es nachteilhaft, dass die T-Nuten aufwendig herzustellen sind und eine große Materialstärke der Platte benötigen.

Aus der US 5 509 644 A sind eine modifizierte T-förmige Nut und ein entsprechender Nutenstein bekannt. Der Nutenstein weist eine umgedrehte T-Form auf mit einem oberen Halsteil und einem unteren länglichen Körperteil. Der untere Fußteil hat Armteile mit geneigten, sich nach außen erweiternden Flächen, die sich vom Halsteil zur unteren ebenen Fläche erstrecken, wobei der Neigungswinkel der Flächen beispielsweise 45° betragen kann. Auch diese modifizierte T-förmige Nut ist aufwendig herzustellen und benötigt eine große Materialstärke der Platte.

Die DE 30 08 195 A1 beschreibt einen Tisch, in dessen Arbeitsfläche Nuten zum Angriff von Spannelementen vorgesehen sind. Die Nuten besitzen eine birnenförmige Formgebung, die auch durch gerade Flächenstücke realisiert werden kann, so das der Querschnitt der Nut senkrecht zur Längsrichtung der Nut ein Sechseck ist. Statt der Verwendung an die Form der Nut angepasster Nutensteine wird vorgeschlagen, Muttern in die Nuten einfallen zu lassen, um dann mit Schrauben oder anderen Spannelementen die Befestigung eines Gegenstandes zu erzielen.

Der Erfindung liegt daher das Problem zugrunde, eine Platte mit mindestens einer Nut in ihrer Oberfläche und einen Nutenstein anzugeben, wobei die Nut einfach und kostengünstig herstellbar ist.

Gelöst wird dieses Problem mit den Merkmalen der unabhängigen Ansprüche. Vorteilhafte Ausgestaltungen der Erfindung ergeben sich aus den abhängigen Ansprüchen.

Bei einer erfindungsgemäßen Platte mit mindestens einer Nut in ihrer Oberfläche, wobei die Nut zur Aufnahme eines Nutensteins vorgesehen ist, ist der Querschnitt der Nut senkrecht zur Längsrichtung der Nut ein Sechseck. Eine sechseckige Nut lässt sich im Vergleich zu bekannten T-Nuten einfacher und kostengünstiger herstellen, insbesondere durch geringere Werkzeugkosten. Dabei kann die erfindungsgemäße Nut in einer geringeren Materialstärke untergebracht werden, was das Gewicht der Platte reduziert. Dennoch können im Vergleich zu bekannten T-Nuten größere Durchmesser der Gewindebohrungen der Nutensteine realisiert werden.

Bei einer Nut mit sechseckigem Querschnitt senkrecht zur Längsrichtung der Nut sind Tiefe und Breite der Nut abhängig von dem Winkel, den die an der Oberfläche der Platte anstoßenden Flächen der Nut mit der Oberfläche der Platte einschließen. Als vorteilhaft hat es sich dabei erwiesen, wenn erfindungsgemäß die an der Oberfläche der Platte anstoßenden Flächen der Nut mit der Oberfläche der Platte einen Winkel im Bereich von 42° bis 48°, vorzugsweise 45°, einschließen. Bei einem Winkel von 45° befindet man sich produktionstechnisch im optimalen Fertigungsbereich der Werkzeuge und Maschinen.

Eine Ausgestaltung der Erfindung sieht vor, dass mehrere Nuten parallel zueinander angeordnet sind, wobei die Nuten in Querrichtung, in Längsrichtung oder sowohl in Quer- als auch in Längsrichtung der Platte verlaufen. Eine solche Platte kann beispielsweise in Verbindung mit Tischbeinen als Nutentisch eingesetzt werden. Es ergibt sich ein flexibles Spann- und Führungssystem zum schnellen und stabilen Befestigen von Teilen in nahezu jeder Position und Lage, insbesondere zum Verschieben und Positionieren von Zubehör und Aufbauten oder unterschiedlichen verschiebbaren Systemelementen, die über eine, zwei oder mehrere Nuten geführt, positioniert und gespannt werden können.

Zur Herstellung der erfindungsgemäßen Nut in der Oberfläche einer Platte, wird vorgeschlagen, dass die Platte mit einem Scheibenfräser von links und von rechts in einem Winkel im Bereich von 42° bis 48°, vorzugsweise 45°, zur Oberfläche der Platte bearbeitet wird und anschließend die entstandene Nut mit einem Stirnfräser rechtwinklig zur Oberfläche der Platte geräumt wird. Zusätzlich kann vorgesehen werden, dass die Kanten der Nut an der Oberfläche der Platte mit einem Radiusfräser bearbeitet werden.

Bei dem erfindungsgemäßen Nutenstein, der zur Aufnahme in einer Nut in einer Oberfläche einer Platte vorgesehen ist, wobei der Nutenstein einen Querschnitt senkrecht zur Längsrichtung der Nut aufweist, der ein Sechseck ist, wird vorgeschlagen, dass die an der oberen Fläche des Nutensteins anstoßenden Flächen des Nutensteins mit der oberen Fläche des Nutensteins einen Winkel im Bereich von 42° bis 48°, vorzugsweise 45°, einschließen. Ein derartiger Nutenstein lässt sich einfach und kostengünstig herstellen und wirkt in vorteilhafter Weise mit der Nut mit sechseckigem Querschnitt senkrecht zur Längsrichtung der Nut in der Platte zusammen. Der Nutenstein kann von einer Seite der Platte in die Nut eingebracht werden.

Insbesondere bei einer Platte mit mehreren parallel zueinander angeordneten Nuten, wobei die Nuten sowohl in Quer- als auch in Längsrichtung der Platte verlaufen ist es vorteilhaft, wenn die Länge des Nutensteins größer ist als die maximale Breite des Querschnitts der Nut senkrecht zur Längsrichtung der Nut. Dadurch ist gewährleistet, dass der Nutenstein auch die Zwischenräume bei den Kreuzungen der Nuten überbrücken kann und ein Spannen in diesen Kreuzungsbereichen möglich ist.

Um die Einsatzmöglichkeiten des erfindungsgemäßen Nutensteins zu erhöhen, wird vorgeschlagen, dass der Nutenstein von oben in die Nut einfädelbar und in der Nut drehbar ausgebildet ist. Dieser Nutenstein ermöglicht auch ein Einführen über die Tischoberfläche direkt in die Nut. Beim Spannen richtet sich der Nutenstein aus, stellt sich in der Nut quer und blockiert. Dies ist besonders zweckmäßig bei langen Nuten oder wenn die Belegung der Platte ein seitliches Einführen des Nutensteins nicht erlaubt.

Ausführungsformen diese Nutensteins können in der Nut um 90° oder um 41,5° drehbar sein. Hierzu wird von einem erfindungsgemäßen Nutenstein mit sechseckigem Querschnitt senkrecht zur Längsrichtung der Nut punktsymmetrisch Material entfernt, um das Einfädeln in die Nut und die Drehung in der Nut zu ermöglichen.

Die Einsatzmöglichkeiten eines Nutensteins können erweitert werden, indem der Nutenstein eine Gewindebohrung aufweist und dem Nutenstein ein zylindrischer Zwingenadapter zugeordnet ist, der mit einer Gewindeschraube mit dem Nutenstein verbindbar ist und zur Aufnahme eines Spannwerkzeugs mit einem zylindrischen Fußstück vorgesehen ist. Mit dem Zwingenadapter ist es möglich, Standard-Zwingen aus dem Zubehör eines Schweiß- und Spanntischsystems zu verwenden.

In der Zeichnung ist die Erfindung anhand von Ausführungsbeispielen näher erläutert. Es zeigen:
Fig. 1, 2, 3 verschiedene Ansichten einer Platte einschließlich einer vergrößert dargestellten Nut,
Fig. 4, 5 Oberansichten anderer Platten,
Fig. 6, 7 schematische Darstellungen der Herstellungsschritte einer Nut,
Fig. 8, 9, 10 verschiedene Ansichten eines Nutensteins,
Fig. 11 einen Schnitt entlang der Linie XI-XI der Fig. 10,
Fig. 12, 13, 14 verschiedene Ansichten eines anderen Nutensteins,
Fig. 15 einen Schnitt entlang der Linie XV-XV der Fig. 14,
Fig. 16 eine vergrößerten Ausschnitt einer Platte mit Nutensteinen,
Fig. 17, 18, 19, 20 verschiedene Ansichten eines weiteren Nutensteins,
Fig. 21 einen Schnitt entlang der Linie XXI-XXI der Fig. 20,
Fig. 22, 23, 24 verschiedene Ansichten eines weiteren Nutensteins,
Fig. 25 einen Schnitt entlang der Linie XXV-XXV der Fig. 24,
Fig. 26 einen Ausschnitt einer Platte mit Nutensteinen,
Fig. 27 einen Schnitt entlang der Linie XXVII-XXVII der Fig. 26,
Fig. 28, 29 verschiedene Ansichten eines Zwingenadapters,
Fig. 30 einen Schnitt entlang der Linie XXX-XXX der Fig. 29,
Fig. 31 eine Platte mit Nutenstein, Zwingenadapter und Spannwerkzeug.

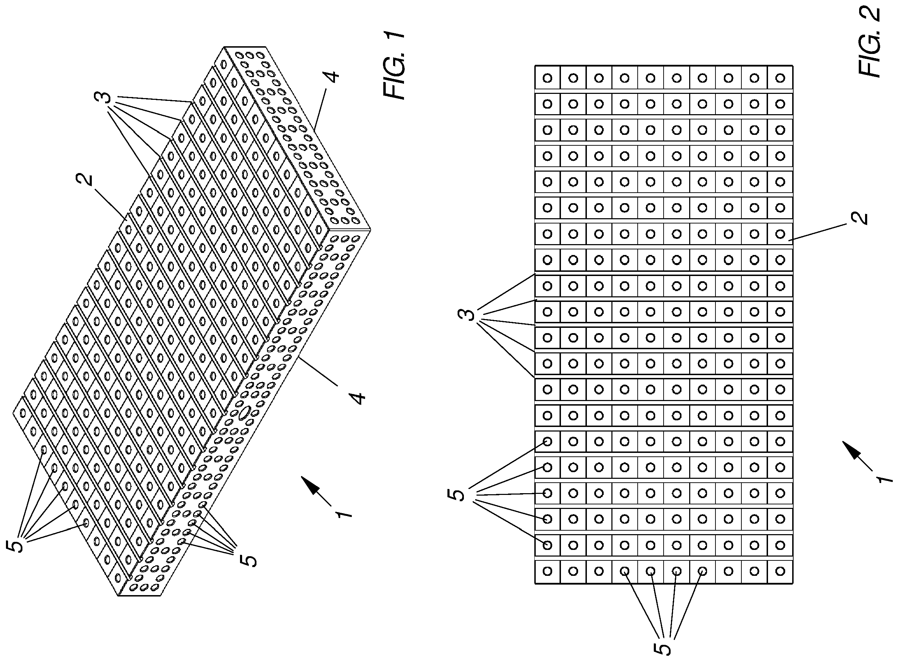

In den Fig. 1, 2, 3 ist eine Platte 1 dargestellt, die in ihrer Oberfläche 2 mehrere parallel zueinander angeordnete Nuten 3 aufweist, wobei die Nuten 3 in Querrichtung der Platte 1 verlaufen. Die Platte 1 ist mit Seitenwangen 4 und zusätzlich mit Bohrungen 5 versehen, die in einem regelmäßigen Raster in der Oberfläche 2 und in den Seitenwangen 4 angeordnet sind. Es versteht sich, dass weder die Bohrungen 5 noch die Seitenwangen 4 zwingend erforderlich sind für die vorliegende Erfindung.

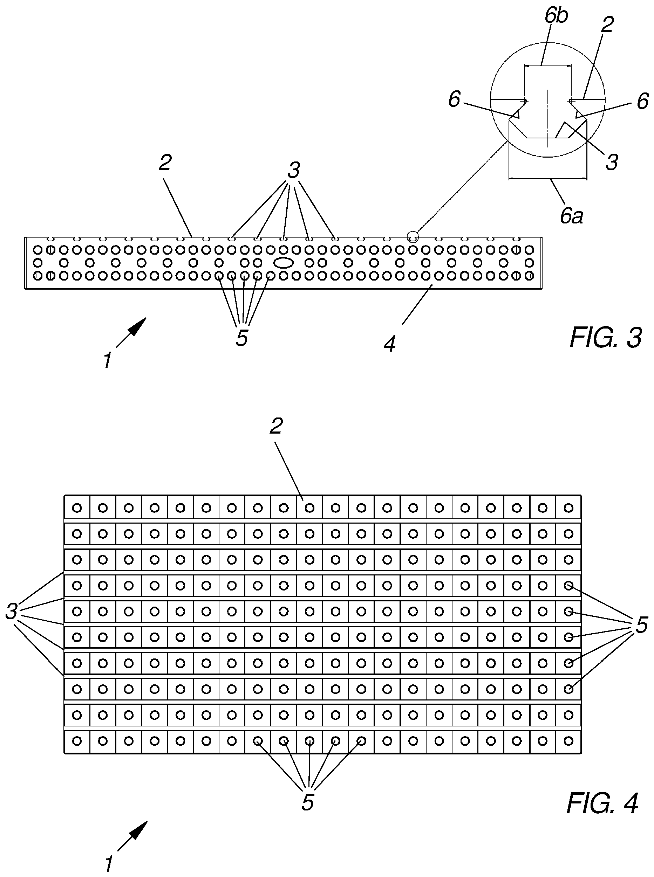

Aus der vergrößerten Darstellung einer Nut 3 in der Fig. 3 erkennt man deutlich, dass der Querschnitt der Nut 3 senkrecht zur Längsrichtung der Nut 3 ein Sechseck ist. Die an der Oberfläche 2 der Platte 1 anstoßenden Flächen 6 der Nut 3 schließen mit der Oberfläche 2 der Platte 1 einen Winkel von 45° ein. Dabei hat sich erfindungsgemäß ein Winkelbereich von 42° bis 48° als vorteilhaft erwiesen. Die maximale Breite der Nut 3 ist mit 6a bezeichnet und die offene Breite der Nut 3 mit 6b.

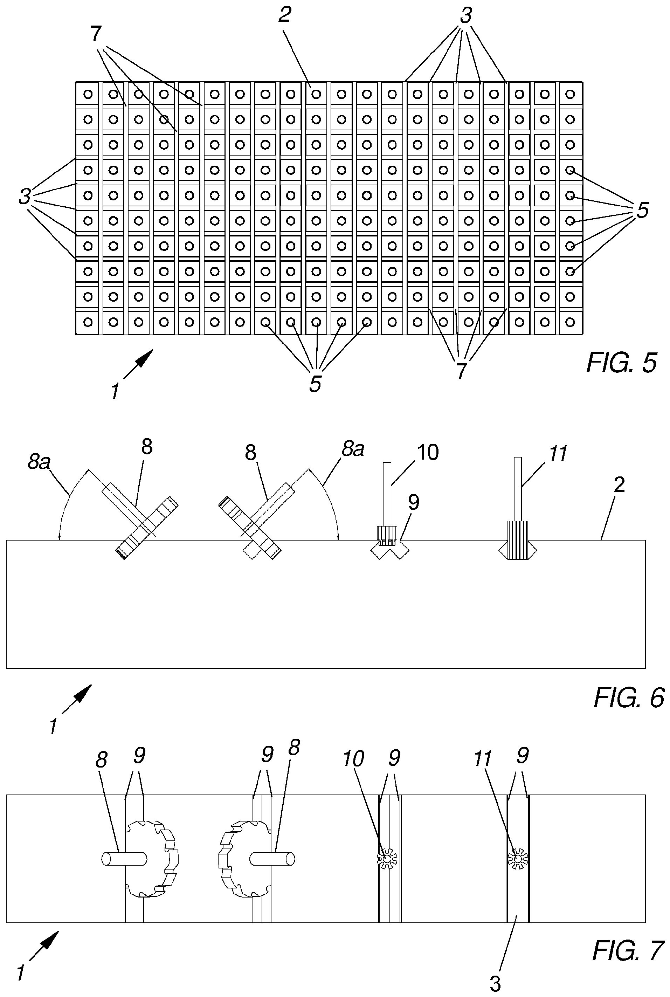

In den Fig. 4 und 5 sind andere Platten 1 dargestellt, die sich von der Platte der Figuren 1 bis 3 durch den Verlauf der Nuten 3 unterschieden. Bei der Platte 1 der Fig. 4 verlaufen die Nuten 3 in Längsrichtung der Platte. Bei der Platte 1 der Fig. 5 verlaufen die Nuten 3 sowohl in Quer- als auch in Längsrichtung der Platte 1, bilden also Kreuzungsbereiche 7.

Das Verfahren zur Herstellung der Nuten 3 in der Oberfläche 2 der Platte 1 wird anhand der Fig. 6 und 7 näher erläutert. Zunächst wird die Platte 1 mit einem Scheibenfräser 8 von links und von rechts in einem Winkel 8a von 45° bearbeitet. Dabei hat sich erfindungsgemäß ein Winkelbereich von 42° bis 48° als vorteilhaft erwiesen. Es versteht sich, dass die Reihenfolge hier keine Rolle spielt.

Danach werden die Kanten 9 der Nut 3 an der Oberfläche 2 der Platte 1 mit einem Radiusfräser 10 bearbeitet. Anschließend wird die entstandene Nut 3 mit einem Stirnfräser 11 rechtwinklig zur Oberfläche 2 der Platte 1 geräumt. Die Reihenfolge der beiden letzten Verfahrensschritte kann dabei auch vertauscht werden, d.h. es erfolgt zuerst das Räumen der Nut 3 mit dem Stirnfräser 11 und erst zum Schluss die Bearbeitung der Kanten 9 mit dem Radiusfräser 10.

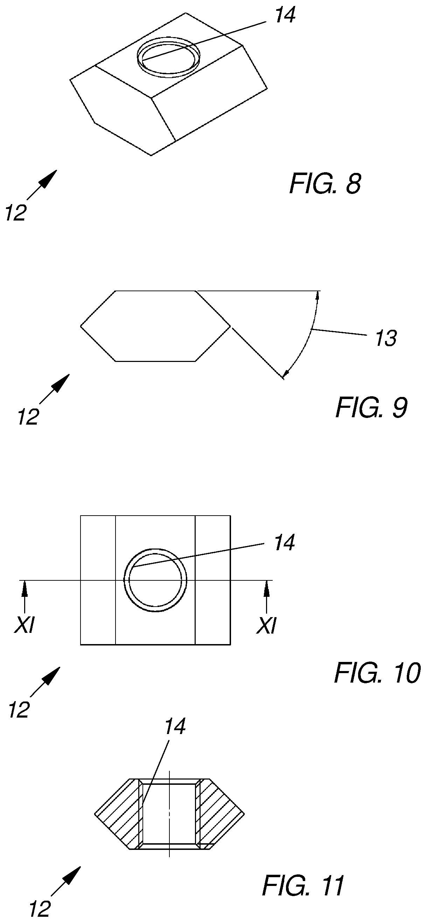

In den Fig. 8 bis 11 ist ein Nutenstein 12 dargestellt, der zur Aufnahme in der Nut 3 in der Oberfläche 2 der Platte 1 vorgesehen ist. Wie sich besonders deutlich aus den Fig. 9 und 11 ergibt, weist der Nutenstein 12 einen Querschnitt senkrecht zur Längsrichtung der Nut 3 auf, der ein Sechseck ist. Dabei beträgt der Winkel 13 45°, wobei sich erfindungsgemäß ein Winkelbereich von 42° bis 48° als vorteilhaft erwiesen hat. Der Nutenstein 12 weist eine Gewindebohrung 14 auf, in der Spannelemente oder dergleichen befestigt werden können.

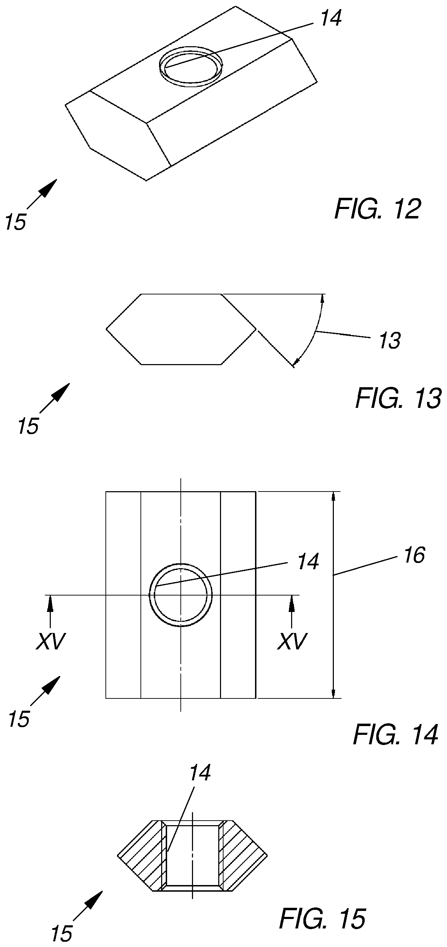

In den Fig. 12 bis 15 ist ein anderer Nutenstein 15 dargestellt, der ebenfalls zur Aufnahme in der Nut 3 in der Oberfläche 2 der Platte 1 vorgesehen ist. Aus den Fig. 13 und 15 ergibt sich besonders deutlich, dass auch dieser Nutenstein 15 einen Querschnitt senkrecht zur Längsrichtung der Nut 3 aufweist, der ein Sechseck ist. Dabei beträgt der Winkel 13 45°, wobei sich erfindungsgemäß ein Winkelbereich von 42° bis 48° als vorteilhaft erwiesen hat. Der Nutenstein 15 weist eine Gewindebohrung 14 auf, in der Spannelemente oder dergleichen befestigt werden können. Im Unterschied zu dem Nutenstein 12 der Fig. 8 bis 11 ist die mit 16 bezeichnete Länge des Nutensteins 15 größer als die maximale Breite 6a des Querschnitts der Nut 3 senkrecht zur Längsrichtung der Nut 3.

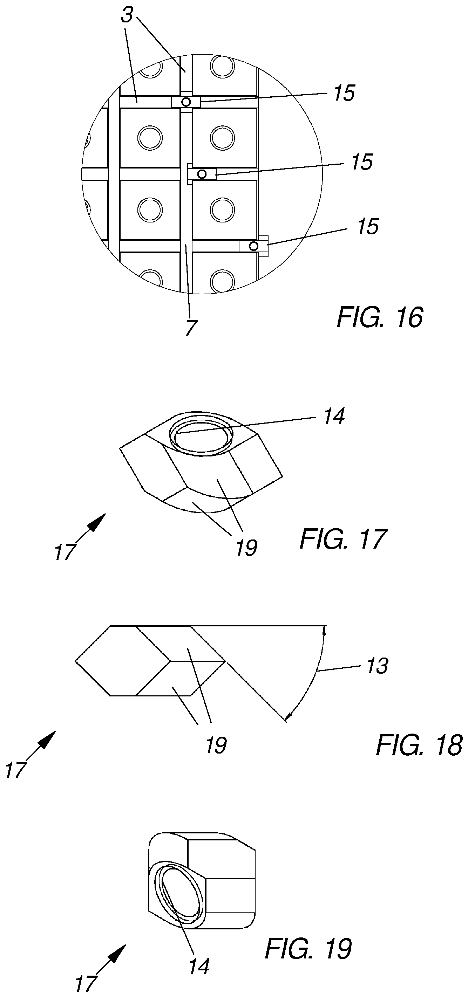

Aus der Darstellung der Fig. 16 ist deutlich zu erkennen, dass der Nutenstein 15 aufgrund seiner Länge auch die Zwischenräume bei den Kreuzungsbereichen 7 der Nuten 3 überbrücken kann und ein Spannen in diesen Kreuzungsbereichen 7 möglich ist.

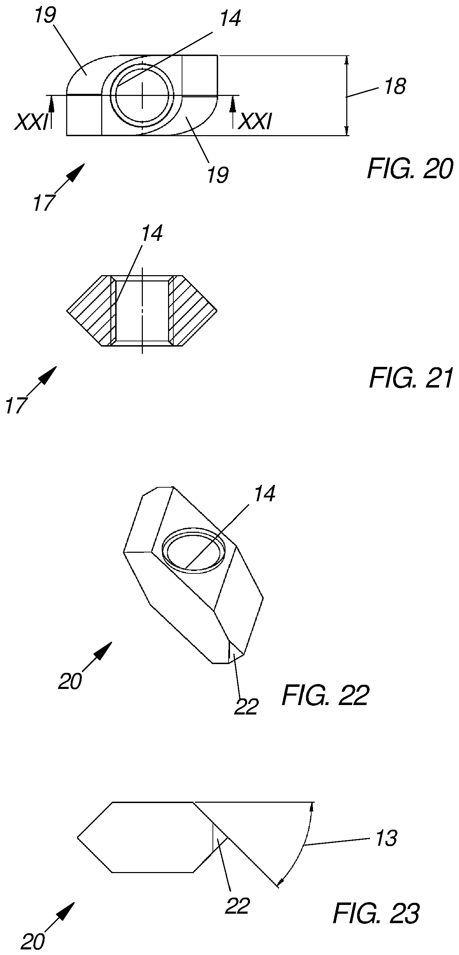

In den Fig. 17 bis 21 ist ein weiterer Nutenstein 17 dargestellt, der, besonders deutlich in den Fig. 18 und 21 zu erkennen, einen Querschnitt senkrecht zur Längsrichtung der Nut 3 aufweist, der ein Sechseck ist. Dabei beträgt der Winkel 13 45°, wobei sich erfindungsgemäß ein Winkelbereich von 42° bis 48° als vorteilhaft erwiesen hat. Der Nutenstein 17 weist eine Gewindebohrung 14 auf, in der Spannelemente oder dergleichen befestigt werden können.

Der Nutenstein 17 ist derart ausgebildet, dass er von oben in die Nut 3 einfädelbar und in der Nut 3 drehbar ist. Dazu ist die Breite 18 kleiner als die offene Breite 6b der Nut 3. Darüber hinaus ist an den Flächen 19 punktsymmetrisch Material entfernt worden, so dass der Nutenstein 17 in der Nut 3 um 90° drehbar ist.

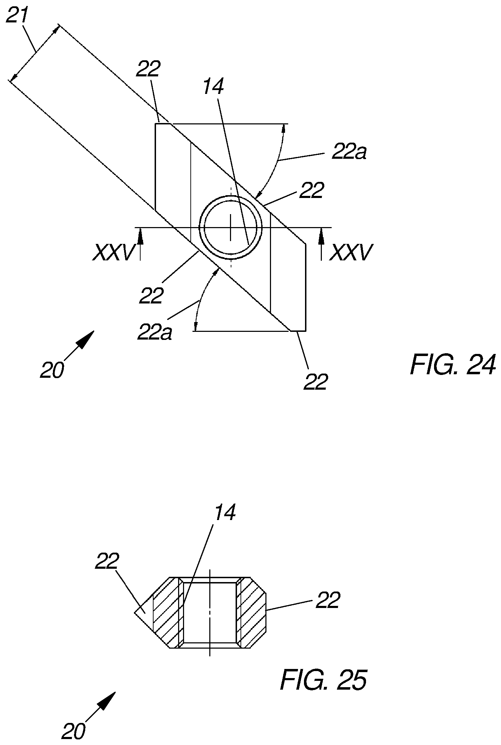

In den Fig. 22 bis 25 ist ein weiterer Nutenstein 20 dargestellt, der, besonders deutlich in den Fig. 23 und 25 zu erkennen, einen Querschnitt senkrecht zur Längsrichtung der Nut 3 aufweist, der ein Sechseck ist. Dabei beträgt der Winkel 13 45°, wobei sich erfindungsgemäß ein Winkelbereich von 42° bis 48° als vorteilhaft erwiesen hat. Der Nutenstein 20 weist eine Gewindebohrung 14 auf, in der Spannelemente oder dergleichen befestigt werden können.

Der Nutenstein 20 ist derart ausgebildet, dass er von oben in die Nut 3 einfädelbar und in der Nut 3 drehbar ist. Dazu ist die Breite 21 kleiner als die offene Breite 6b der Nut 3. Darüber hinaus ist an den Flächen 22 punktsymmetrisch Material entfernt worden, so dass der Nutenstein 17 in der Nut 3 um einen Winkel 22a, der im Ausführungsbeispiel 41,5° beträgt, drehbar ist.

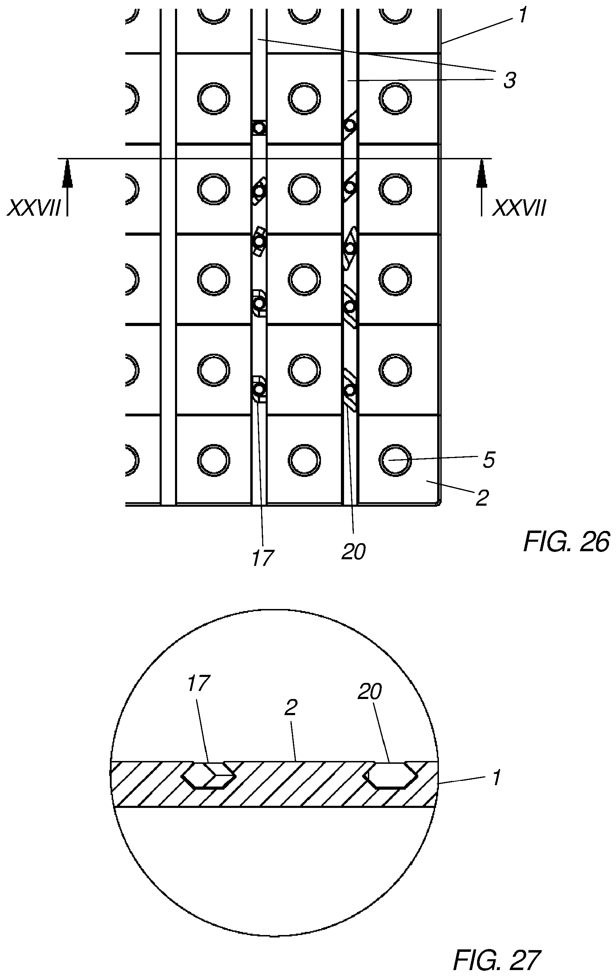

Das Einfädeln und Drehen der Nutensteine 17, 20 ist anhand der Detaildarstellungen der Fig. 26 und 27 näher erläutert. In der untersten Darstellung der Fig. 26 befinden sich die Nutensteine 17, 20 noch außerhalb der Nut 3. In der Darstellung darüber sind die Nutensteine 17, 20 jeweils in die Nut 3 eingelegt. Anschließend erfolgt das Drehen der Nutensteine 17, 20 in der Nut 3 im Uhrzeigersinn, bis die in der obersten Darstellung gezeigte Endposition der Nutensteine 17, 20 erreicht ist. Insbesondere aus der vergrößerten Schnittdarstellung der Fig. 27 ergibt sich der sechseckige Querschnitt der Nutensteine 17, 20 senkrecht zur Längsrichtung der Nut 3 in der Nut 3.

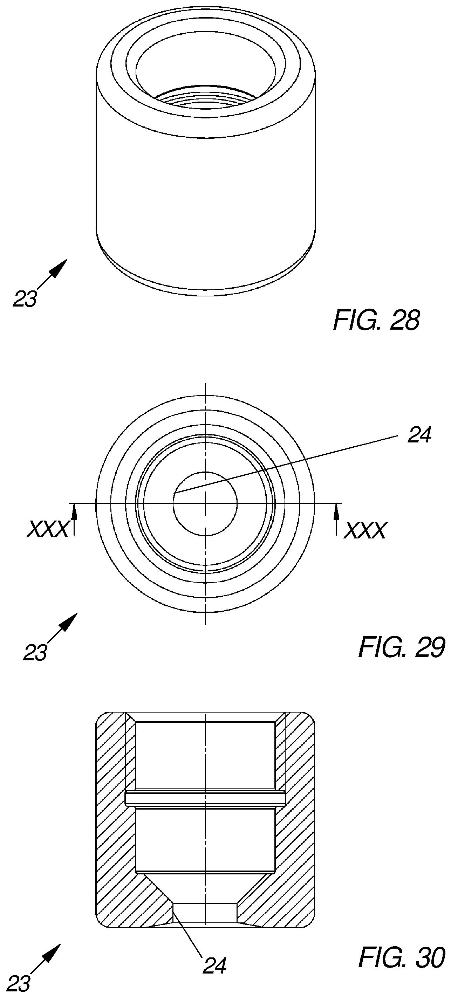

In den Fig. 28 bis 30 ist ein Zwingenadapter 23 dargestellt, der eine zylindrische Form aufweist und mit einer Senkbohrung 24 versehen ist.

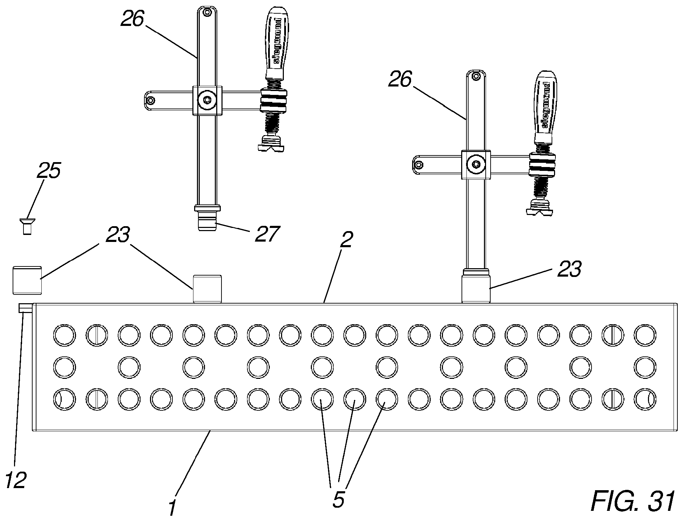

Wie sich aus der Fig. 31 ergibt, kann der Zwingenadapter 23 mit einer Senkschraube 25 mit dem Nutenstein 12 verbunden werden. Es versteht sich, dass hier auch die Nutensteine 15, 17 oder 20 verwendet werden könnten. Der Zwingenadapter 23 ist zur Aufnahme eine Spannwerkzeugs 26 mit einem zylindrischen Fußstück 27 vorgesehen. Mit dem Zwingenadapter 23 ist es möglich, Standard-Zwingen aus dem Zubehör eines Schweiß- und Spanntischsystems zu verwenden.

### Bezugszeichenliste

- 1: Platte
- 2: Oberfläche von 1
- 3: Nuten
- 4: Seitenwangen von 1
- 5: Bohrungen
- 6: Fläche von 3
- 6a: maximale Breite von 3
- 6b: offene Breite von 3
- 7: Krezungsbereiche
- 8: Scheibenfräser
- 8a: Winkel
- 9: Kanten von 3
- 10: Radiusfräser
- 11: Stirnfräser
- 12: Nutenstein
- 13: Winkel
- 14: Gewindebohrung in 12
- 15: Nutenstein
- 16: Länge von 15
- 17: Nutenstein
- 18: Breite von 17
- 19: Flächen von 17
- 20: Nutenstein
- 21: Breite von 20
- 22: Flächen von 20
- 22a: Winkel
- 23: Zwingenadapter
- 24: Senkbohrung von 23
- 25: Senkschraube
- 26: Spannwerkzeug
- 27: Fußstück von 26

## Patentansprüche

1. Platte (1) mit mindestens einer Nut (3) in ihrer Oberfläche (2), wobei die Nut (3) zur Aufnahme eines Nutensteins (12, 15, 17, 20) vorgesehen ist und der Querschnitt der Nut (3) senkrecht zur Längsrichtung der Nut (3) ein Sechseck ist, **dadurch gekennzeichnet, dass** die an der Oberfläche (2) der Platte (1) anstoßenden Flächen (6) der Nut (3) mit der Oberfläche (2) der Platte (1) einen Winkel im Bereich von 42° bis 48°, vorzugsweise 45°, einschließen.

2. Platte (1) nach Anspruch 1, **dadurch gekennzeichnet, dass** mehrere Nuten (3) parallel zueinander angeordnet sind, wobei die Nuten (3) in Querrichtung, in Längsrichtung oder sowohl in Quer- als auch in Längsrichtung der Platte (1) verlaufen.

3. Nutenstein (12, 15, 17, 20), der zur Aufnahme in einer Nut (3) in einer Oberfläche (2) einer Platte (1) vorgesehen ist, wobei der Nutenstein (12, 15, 17, 20) einen Querschnitt senkrecht zur Längsrichtung der Nut (3) aufweist, der ein Sechseck ist, **dadurch gekennzeichnet, dass** die an der oberen Fläche des Nutensteins (12, 15, 17, 20) anstoßenden Flächen des Nutensteins (12, 15, 17, 20) mit der oberen Fläche des Nutensteins (12, 15, 17, 20) einen Winkel (13) im Bereich von 42° bis 48°, vorzugsweise 45°, einschließen.

4. Nutenstein (15) nach Anspruch 3, **dadurch gekennzeichnet, dass** die Länge (16) des Nutensteins (15) größer ist als die maximale Breite (6a) des Querschnitts der Nut (3) senkrecht zur Längsrichtung der Nut (3).

5. Nutenstein (17, 20) nach Anspruch 3, **dadurch gekennzeichnet, dass** der Nutenstein (17, 20) von oben in die Nut (3) einfädelbar und in der Nut (3) drehbar ausgebildet ist.

6. Nutenstein (17) nach Anspruch 5, **dadurch gekennzeichnet, dass** der Nutenstein (17) in der Nut (3) um 90° drehbar ist.

7. Nutenstein (20) nach Anspruch 5, **dadurch gekennzeichnet, dass** der Nutenstein (20) in der Nut (3) um 41,5° drehbar ist.

8. Nutenstein (12, 15, 17, 20) nach einem der Ansprüche 3 bis 7, **dadurch gekennzeichnet, dass** der Nutenstein (12, 15, 17, 20) eine Gewindebohrung 14 aufweist und ein zylindrischer Zwingenadapter (23) vorgesehen ist, der mit einer Gewindeschraube (25) mit dem Nutenstein (12, 15, 17, 20) verbindbar ist und zur Aufnahme eines Spannwerkzeugs (26) mit einem zylindrischen Fußstück (27) vorgesehen ist.

## Claims

1. Plate (1) with at least one slot (3) in its surface (2), wherein the slot (3) is provided for acceptance of a slot nut (12, 15, 17, 20), and the cross-section of the slot (3) in perpendicular relation to the longitudinal direction of the slot (3) being a hexagon, **characterized in that** the surfaces (6) of the slot (3) abutting on the surface (2) of the plate (1) enclose with the surface (2) of the plate (1) an angle in the range of 42° to 48°, preferably 45°.

2. Plate (1) according to claim 1, **characterized in that** several slots (3) are arranged parallel to one another, wherein the slots (3) extend in transverse direction, in longitudinal direction, or both in transverse and longitudinal directions of the plate (1).

3. Slot nut (12, 15, 17, 20), provided for acceptance in a slot (3) in a surface (2) of a plate (1), with the slot nut (12, 15, 17, 20) having a cross-section in perpendicular relation to the longitudinal direction of the slot (3), which cross-section being a hexagon, **characterized in that** the surfaces of the slot nut (12, 15, 17, 20) abutting the upper surface of the slot nut (12, 15, 17, 20) enclose with the upper surface of the slot nut (12, 15, 17, 20) an angle (13) in the range from 42° to 48°, preferably 45°.

4. Slot nut (15) according to claim 3, **characterized in that** the length (16) of the slot nut (15) is greater than the maximum width (6a) of the cross-section of the slot (3) in perpendicular relation to the longitudinal direction of the slot (3).

5. Slot nut (17, 20) according to claim 3, **characterized in that** the slot nut (17, 20) is designed to be threaded into the slot (3) from above and to be rotatable in the slot (3).

6. Slot nut (17) according to claim 5, **characterized in that** the slot nut (17) is rotatable by 90° in the slot (3).

7. Slot nut (20) according to claim 5, **characterized in that** the slot nut (20) is rotatable by 41.5° in the slot (3).

8. Slot nut (12, 15, 17, 20) according to one of the claims 3 to 7, **characterized in that** the slot nut (12, 15, 17, 20) has a threaded bore (14) and a cylindrical clamp adapter (23) is provided which is connectable to the slot nut (12, 15, 17, 20) with a threaded screw (25) and provided for receiving a clamping tool (26) with a cylindrical foot piece (27).

## Revendications

1. - Plaque (1) ayant au moins une rainure (3) dans sa surface (2), la rainure (3) étant prévue pour recevoir un écrou à rainure (12, 15, 17, 20) et la section transversale de la rainure (3) perpendiculaire à la direction longitudinale de la rainure (3) étant hexagonale, **caractérisée par le fait que** les faces (6) de la rainure (3) qui sont en contact avec la surface (2) de la plaque (1) forment un angle dans la plage de 42° à 48°, de préférence de 45°, avec la surface (2) de la plaque (1).

2. - Plaque (1) selon la revendication 1, **caractérisée par le fait que** plusieurs rainures (3) sont disposées parallèlement les unes aux autres, les rainures (3) s'étendant dans la direction transversale, dans la direction longitudinale ou à la fois dans la direction transversale et dans la direction longitudinale de la plaque (1).

3. - Ecrou à rainure (12, 15, 17, 20), qui est prévu pour être reçu dans une rainure (3) dans une surface (2) d'une plaque (1), l'écrou à rainure (12, 15, 17, 20) présentant une section transversale perpendiculaire à la direction longitudinale de la rainure (3), qui est hexagonale, **caractérisé par le fait que** les faces de l'écrou à rainure (12, 15, 17, 20) adjacentes à la face supérieure de l'écrou à rainure (12, 15, 17, 20) forment avec la face supérieure de l'écrou à rainure (12, 15, 17, 20) un angle (13) dans la plage de 42° à 48°, de préférence de 45°.

4. - Ecrou à rainure (15) selon la revendication 3, **caractérisé par le fait que** la longueur (16) de l'écrou à rainure (15) est supérieure à la largeur maximale (6a) de la section transversale de la rainure (3) perpendiculairement à la direction longitudinale de la rainure (3).

5. - Ecrou à rainure (17, 20) selon la revendication 3, **caractérisé par le fait que** l'écrou à rainure (17, 20) est apte à être enfilé par le haut dans la rainure (3) et est conçu pour pouvoir tourner dans la rainure (3).

6. - Ecrou à rainure (17) selon la revendication 5, **caractérisé par le fait que** l'écrou à rainure (17) est apte à tourner de 90° dans la rainure (3).

7. - Ecrou à rainure (20) selon la revendication 5, **caractérisé par le fait que** l'écrou à rainure (20) est apte à tourner de 41,5° dans la rainure (3).

8. - Ecrou à rainure (12, 15, 17, 20) selon l'une des revendications 3 à 7, **caractérisé par le fait que** l'écrou à rainure (12, 15, 17, 20) présente un alésage fileté (14) et un adaptateur de serrage cylindrique (23) est prévu, lequel est apte à être relié avec l'écrou à rainure (12, 15, 17, 20) par une vis filetée (25) et est prévu pour recevoir un outil de serrage (26) avec une pièce de pied cylindrique (27).
